**Europäisches Patentamt**

**European Patent Office**

**Office européen des brevets**

(19)

(11) Numéro de publication : **0 392 562 B1**

(12) **FASCICULE DE BREVET EUROPEEN**

(45) Date de publication du fascicule du brevet :
30.09.92 Bulletin 92/40

(51) Int. Cl.$^5$ : **C02F 1/48**

(21) Numéro de dépôt : **90107131.6**

(22) Date de dépôt : **13.04.90**

(54) **Appareil à action magnétique pour le traitement anti-calcaire de l'eau.**

(30) Priorité : **14.04.89 IT 8556489**

(43) Date de publication de la demande :
**17.10.90 Bulletin 90/42**

(45) Mention de la délivrance du brevet :
**30.09.92 Bulletin 92/40**

(84) Etats contractants désignés :
**AT BE CH DE DK ES FR GB GR IT LI LU NL SE**

(56) Documents cités :
**EP-A- 0 286 137**
**US-A- 4 343 707**
**US-A- 4 563 286**
**US-A- 4 707 255**

(73) Titulaire : **REXITAL SRL**
**Via Pasubio, 49**
**I-36035 Torrebelvicino (Vicenza) (IT)**

(72) Inventeur : **Costalunga, Francesco Davide**
**Via Aspromonte 27**
**Schio (Vicenza) (IT)**

(74) Mandataire : **Bettello, Pietro, Dott. Ing. et al**
**Via Col d'Echele, 25**
**I-36100 Vicenza (IT)**

## Description

La présente invention a pour objet un appareil à action magnétique pour le traitement anti-calcaire de l'eau, du type comprenant une série de paires d'aimants permanents qui se font mutuellement face avec des polarités opposées et entre lesquels on fait passer en continu le courant d'eau à traiter.

On connaît différents procédés propres à diminuer la dureté des eaux, ces procédés nécessitant le plus souvent pour leur mise en oeuvre des appareillages relativements délicats, impliquant notamment l'usage de réactifs dosés ou de résines échangeuses qui donnent très fréquemment lieu à une production considérable de boues, ou bien obligent à des régénérations à l'aide de processus relativement compliqués et coûteux.

L'un des procédés aptes à remédier à ces inconvénients consiste à faire passer un courant d'eau à travers un champ magnétique de direction constante, de façon à obtenir une orientation unidirectionnelle des forces magnétiques dans les ions présents dans l'eau.

En fait, cette unidirectionnalité fait qu'on inhibe aux ions de calcium et de magnésium la capacité de former des cristaux de carbonate de calcium ou de magnésium, lesquels sont responsables de la formation des incrustations de calcite dans les canalisations, serpentins ou autres appareillages mis en contact avec l'eau.

Ce processus permet l'obtention d'une eau qui peut parfaitement être employée pour usage alimentaire.

De plus, les appareillages propres à la mise en oeuvre du procédé en cause sont de coût réduit, d'installation aisée et de faible encombrement, et ils ne nécessitent pas de maintenance du fait que les aimants permanents ont une durée utile qui peut largement dépasser plusieurs décennies.

Un grand nombre des appareils propres à la mise en oeuvre de ce procédé comprennent un corps de forme substantiellement cylindrique, équipé d'un conduit d'entrée pour l'eau à traiter, laquelle passe dans un mince entrefer ménagé entre les pôles des aimants permanents, avant de sortir à l'extérieur.

Il est évident que pour conférer de l'efficacité à l'opération, il est nécessaire d'avoir recours à des champs magnétiques de valeur élevée qui ne peuvent être obtenus que moyennant des entrefers d'épaisseur extrêmement réduite ; ceci implique inévitablement des pertes de charge considérables dans l'appareillage, ainsi que le risque de colmatage, particulièrement lorsque l'eau à traiter comporte des impuretés en suspension.

Pour accroître l'efficacité du procédé, on a proposé des dispositifs qui comprennent en substance un conduit dans lequel l'eau à traiter s'écoule en continu et au niveau de la paroi extérieur duquel sont disposées en succession plusieurs paires d'aimants permanents de polarités opposées, en permettant de la sorte de multiplier l'efficacité de l'action de magnétisation.

Toutefois on comprend que ces dispositifs doivent obligatoirement présenter un développement axial relativement important, ce qui détermine une augmentation sensible de leur encombrement par rapport aux dispositifs à aimant unique sus-mentionnés.

Un but de la présente invention est de réaliser un appareil du type décrit en dernier lieu qui comprend une pluralité de paires d'aimants et qui néanmoins présente un encombrement comparable aux dispositifs du type mentionné en premier, de façon à ce qu'il soit apte à être utilisé sans problème aussi bien dans des installations de type domestique que dans des installations de type industriel.

L'appareil de traitement suivant l'invention est caractérisé en ce qu'il comporte un corps substantiellement cylindrique qui renferme les aimants disposés suivant deux structures à profil circulaire, divisées en secteurs adjacents de polarités opposées, ces deux structures étant orientées parallèlement en se faisant face par des secteurs toujours de polarités opposées, et en étant séparées par un entrefer de hauteur réduite fermé latéralement, l'une des deux structures présentant en son centre une ouverture dans laquelle sont engagés deux conduits distincts prévus pour l'entrée, respectivement la sortie, de l'eau avec des orifices qui s'ouvrent dans l'entrefer à l'intérieur duquel est prévue une fourchette à trois dents d'épaisseur égale à celle de l'entrefer, les orifices précités étant prévus entre les dents latérales tandis que la dent centrale s'étend desdits orifices jusqu'à la périphérie de l'entrefer, les deux dents latérales s'étendant du débouché extérieur de ces orifices jusqu'à l'intérieur de l'entrefer.

D'autres caractéristiques de l'invention ressortiront des revendications secondaires.

Grâce à la disposition structurelle exposée ci-dessus, l'eau accomplit un parcours du type substantiellement circulaire depuis l'orifice d'entrée jusqu'à l'orifice de sortie en passant à travers une série de champs magnétiques de sens opposés disposés en séquence, ces champs étant agencés de manière à former une structure de forme circulaire. On comprend que l'encombrement du dispositif est beaucoup plus limité que celui des dispositifs comportant plusieurs paires d'aimants permanents disposés de manière séquentielle, tels que connus dans l'état de la technique.

En même temps, par suite de la grande efficacité de l'action de magnétisation obtenue par le fait que l'eau est soumise à l'effet de plusieurs champs magnétiques, on est en mesure d'augmenter la largeur de l'entrefer, en diminuant légèrement la valeur de chaque champ magnétique, mais en réduisant au minimum les pertes de charge et les risques de colmatage de l'entrefer rencontrés dans les dispositifs précédemment décrits.

La présente invention va maintenant être illustrée et décrite en détail, suivant l'une de ses formes particulières de réalisation donnée à titre d'exemple non limitatif, avec l'aide du dessin annexée dans lequel :

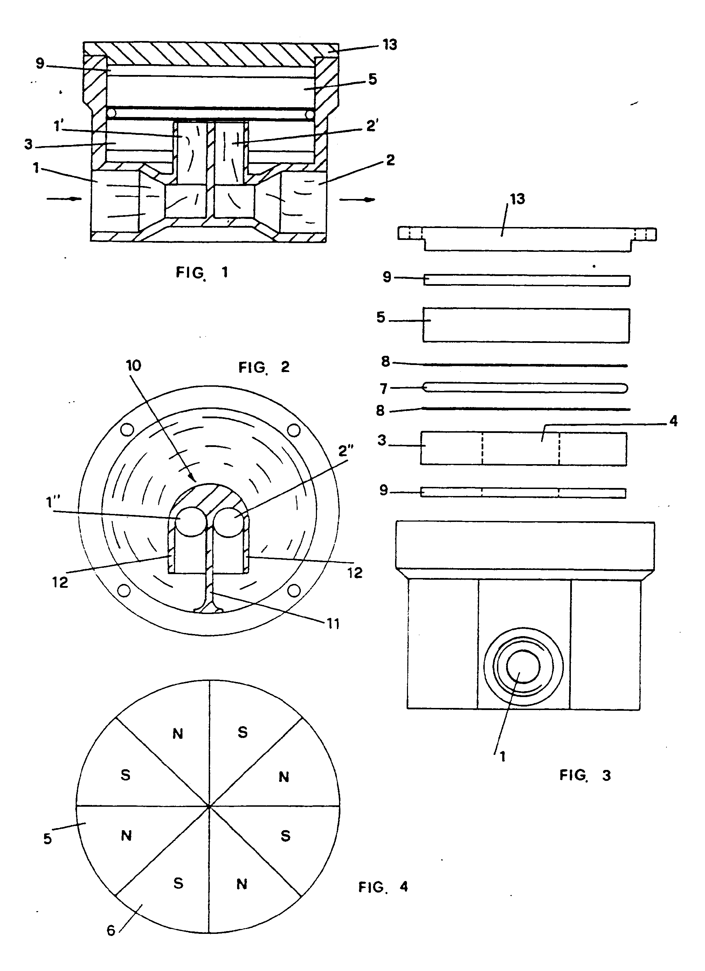

La fig. 1 est une coupe verticale de l'appareil suivant l'invention.

La fig. 2 est une vue en plan par le haut de l'intérieur de cet appareil.

La fig. 3 est une vue de côté éclatée.

La fig. 4 est une vue en plan de l'un des aimants.

L'invention comprend un corps substantiellement cylindrique pourvu d'un conduit d'entrée 1 et d'un conduit de sortie 2 pour l'eau. Au centre, ces deux conduits sont orientés verticalement, parallèlement l'un à l'autre en se faisant face, tout en étant entourés par une stucture 3 de forme circulaire, à profil annulaire par suite de la présence de l'ouverture interne 4 à l'intérieur de laquelle sont engagées les portions verticales des conduits 1 et 2.

Au-dessus de la structure 3 est montée une autre structure 5 également établie à un profil circulaire, mais dépourvue de toute ouverture au niveau de sa partie centrale.

Les deux structures sont réalisées en un matériau à magnétisation permanente et elles sont constituées par une série de secteurs 6 qui se font suite avec des polarités de sens opposés ; les deux structures 3 et 5 sont bien entendu orientées de manière à se faire mutuellement face avec des secteurs de polarités opposées.

Entre les deux structures magnétiques 3 et 5 sont interposés d'une part un joint annulaire 7, préférablement du type torique, qui fait également fonction de câle d'écartement, d'autre part deux plaquettes 8 réalisées en une matière ferreuse et inoxydable, propre à éviter l'oxydation des aimants et leur mise hors d'état rapide.

Sur la surface des éléments magnétiques, au niveau de leur face opposée à celle de l'entrefer, sont prévus des éléments 9 à profil circulaire, réalisés en une matière ferreuse pour faire fonction de "masse magnétique" pour les secteurs d'une même structure 3 ou 5.

Dans l'entrefer débouchent les portions verticales 1' et 2' des conduits 1 et 2.

A l'intérieur de l'entrefer est placée une fourchette 10 dont l'épaisseur est égale à celle de l'entrefer et entre les dents de laquelle sont disposés les orifices 1″ et 2″ des conduits ; une dent centrale 11 s'étend depuis ces orifices jusqu'à la périphérie de l'entrefer, tandis que deux dents latérales 12 s'étendent depuis le débouché desdits orifices jusqu'à l'intérieur de l'entrefer, sans cependant atteindre la périphérie de ce dernier.

De cette façon, une fois entrée dans l'entrefer à travers l'orifice 1″, l'eau est obligée de s'écouler tout d'abord de manière substantiellement radiale pour contourner la première dent 12, puis de parcourir de manière substantiellement circulaire l'ensemble de l'entrefer, en étant ainsi soumise à l'action des paires de champs magnétiques opposés engendrés par les structures 3 et 5, et finalement de s'écouler à travers l'orifice de sortie 2″, également suivant un parcours substantiellement radial.

L'ensemble du corps est fermé vers le haut à l'aide d'un couvercle 13.

## Revendications

1. Appareil à action magnétique pour le traitement anti-calcaire de l'eau, du genre comprenant une série de paires d'aimants permanents qui se font mutuellement face avec des polarités opposées et entre lesquelles le courant d'eau à traiter s'écoule de manière continue, caractérisé en ce qu'il comporte un corps substantiellement cylindrique qui renferme les aimants disposés suivant deux structures (3, 5) à profil circulaire, divisées en secteurs adjacents (6) de polarités opposées, ces deux structures étant orientées parallèlement en se faisant face par des secteurs toujours de polarités opposées et en étant séparées par un entrefer de hauteur réduite, fermé latéralement, l'une (3) des deux structures présentant en son centre une ouverture dans laquelle sont engagés deux conduits distincts (1, 2) pour l'entrée, respectivement la sortie, de l'eau, avec des orifices (1″ et 2″) qui s'ouvrent dans l'entrefer à l'intérieur duquel est prévue une fourchette (10) à trois dents (11, 12) d'épaisseur égale à celle de l'entrefer, les orifices précités étant prévus entre les deux dents latérales tandis que la dent centrale (11) s'étend desdits orifices jusqu'à la périphérie de l'entrefer, les deux dents latérales (12) s'étendant du débouché extérieur de ces orifices jusqu'à l'intérieur de l'entrefer.

2. Appareil suivant la revendication 1, caractérisé en ce que l'entrefer est fermé latéralement pour un joint annulaire (7) assurant l'étanchéité hydraulique, les deux structures magnétiques (3, 5) étant isolées du courant d'eau par deux plaquettes (8) en une matière ferreuse et inoxydable, disposées au niveau de la face des structures magnétiques (3, 5) qui est opposée à celle qui s'ouvre sur l'entrefer, des éléments (9) en une matière ferro-magnétique étant prévus pour faire fonction de "masse magnétique" pour les différents secteurs (6) des structures précitées (3, 5).

## Claims

1. Device having a magnetic action for anti-lime treatment of water, of the type comprising a series of pairs of permanent magnets positioned facing one another with opposing polarities and between which the stream of water to be treated flows continuously,
characterised in that said device incorporates a substantially cylindrical body which contains the magnets disposed along two structures (3, 5) of circular section, divided into adjacent sectors (6) of opposing polarities, said two structures being aligned parallel and facing one another by sectors again of opposite polarities and being separated by an air gap of reduced height, laterally occluded, one (3) of the two structures presenting at its centre an opening in which two discrete conduits (1, 2) engage, respectively for entry and exit of the water, with orifices (1″ and 2″) which open into the air gap, inside which is provided a fork (10) having three prongs (11, 12) of the same thickness as the air gap, the aforesaid orifices being provided between the two lateral prongs whereas the central prong (11) extends from said orifices to the periphery of the air gap, the two lateral prongs (12) extending from the external outlet of these orifices to the inside of the air gap.

2. Device according to claim 1, characterised in that the air gap is laterally occluded by an annular joint (7) which provides hydraulic leak-tightness, the two magnetic structures (3, 5) being insulated from the stream of water by two plates (8) made from a non-oxidising ferrous material and disposed level with the surface of the magnetic structures (3, 5) that lies opposite the one opening onto the air gap, elements (9) made from a ferromagnetic material being provided to act as "magnetic mass" for the different sectors (6) of the aforesaid structures (3, 5).

## Patentansprüche

1. Magnetisch wirkendes Gerät für die Kesselsteinverhütung, mit einer Reihe von einander zugewandten Dauermagnetpaaren mit entgegengesetzten Polaritäten, wobei zwischen diesen Dauermagnetpaaren der zu behandelnde Wasserstrom in kontinuierlicher Weise entlanggeführt wird, dadurch gekennzeichnet, daß das Gerät einen im wesentlichen zylinderförmigen Korpus aufweist, welcher die entsprechend zweier Strukturen (3, 5) mit kreisförmigem Profil ausgebildeten und in benachbarte Sektoren (6) entgegengesetzter Polaritäten unterteilten Magnete umschließt, daß diese Strukturen (3, 5) parallel orientiert sind, indem sie mit ihren Sektoren stets entgegengesetzter Polaritäten einander gegenüberliegen und von einem seitlich geschlossenen Spalt reduzierter Höhe getrennt sind, wobei die eine (3) der beiden Strukturen (3, 5) in ihrer Mitte eine Öffnung aufweist, in welche die beiden getrennten Leitungen (1, 2) für den Eintritt bzw. Austritt des Wassers einmünden und in den Spalt führende Öffnungen (1″ und 2″) vorgesehen sind, daß in dem Inneren des Spaltes eine drei Zähne (11, 12) aufweisende kleine Gabel (10) angeordnet ist, der-en Dicke gleich derjenigen des Spaltes entspricht, daß die vorgenannten Öffnungen zwischen den beiden seitlichen Zähnen der kleinen Gabel angeordnet sind, während der mittlere Zahn (11) sich von diesen Öffnungen ausgehend bis zum Umfang des Spaltes erstreckt und daß sich die beiden seitlichen Zähne (12) von dem Außenumfang dieser Öffnungen ausgehend bis in das Innere des Spaltes erstrecken.

2. Gerät nach Anspruch 1, dadurch gekennzeichnet, daß der Spalt von einer Ringdichtung (7) seitlich geschlossen ist, welche eine hydraulische Dichtung sicher stellt, daß die beiden magnetischen Strukturen (3, 5) von dem Wasserstrom mittels zweier aus eisenhaltigem und rostfreiem Material bestehenden Scheiben (8) isoliert sind, welche in Höhe derjenigen Stirnfläche der magnetischen Strukturen (3, 5) angeordnet sind, welche derjenigen Stirnfläche gegenüberliegt, die dem Spalt zugekehrt ist und daß die aus einem ferromagnetischen Stoff bestehenden Elemente (9) als "magnetische Masse" für die verschiedenen Sektoren (6) der vorerwähnten Strukturen (3, 5) dienen.

FIG. 1

FIG. 2

FIG. 3

FIG. 4